# EUROPÄISCHE PATENTSCHRIFT

(11) **EP 2 706 333 B1**
(45) Veröffentlichungstag und Bekanntmachung des Hinweises auf die Patenterteilung: **22.11.2017**
(21) Anmeldenummer: 13003105.7
(22) Anmeldetag: 18.06.2013
(51) Int. Cl.: G01L 9/00, G01L 19/06

(54) **Membrandruckmittler mit Dichtung im Randbereich**
Membrane pressure transmitter with seal in the peripheral area
Transmetteur de pression à membrane avec joint d'étanchéité dans la zone de bordure

(30) Priorität: 18.06.2012 DE 102012011937
(43) Veröffentlichungstag der Anmeldung: 12.03.2014
(73) Patentinhaber: Armaturenbau GmbH, 46487 Wesel-Ginderich (DE)
(72) Erfinder: Heller, Heinz, 74731 Rippberg (DE)
(74) Vertreter: Demski, Siegfried

(56) Entgegenhaltungen:
- US-A- 4 046 010
- US-A- 4 199 991
- US-A- 5 495 768

## Beschreibung

Die Erfindung betrifft einen Membrandruckmittler, insbesondere zum Einsatz bei aggressiven oder hochviskosen Medien, vorzugsweise in Form eines Platten- oder Rohrdruckmittlers, umfassend zumindest ein Druckmittlergehäuse mit einem in einer Ausnehmung eingelassenen Membranbett und einer Membran, welche fluiddicht dem Membranbett gegenüberliegend befestigt ist und ein Verfahren zur Herstellung einer Verbindung zwischen Membran und Druckmittlergehäuse.

Gattungsgemäße Membrandruckmittler, beispielsweise Flanschdruckmittler, Zellendruckmittler, Nahrungsmitteldruckmittler oder Rohrdruckmittler, werden in vielen Anwendungen zur Messung des Druckes eingesetzt. Diese bestehen in der Regel aus einem metallischen Druckmittlergehäuse mit einem meist konzentrisch in einer Stirnfläche oder in Axialrichtung ausgebildeten Membranbett. Das Membranbett wird mit einer dünnen Membran überspannt. Die Membrandruckmittler werden überwiegend dort eingesetzt, wo der Druck von aggressiven oder hoch viskosen Medien gemessen werden muss. Hierbei dient die Membran als Trennmedium zwischen dem mitunter aggressiven oder hoch viskosen Medium und der Messvorrichtung. Aus diesem Grunde wird die Membran aus hochwertigem nicht korrosiven Materialien gefertigt. Die Verwendung von derartigen Materialien ist äußerst kostenaufwändig. Daher wird angestrebt, die weiteren Bestandteile des Membrandruckmittlers, beispielsweise Druckmittlergehäuse, aus weniger teuren Materialien herzustellen, welche im Normalfall nur eine geringe Rost- oder Säurebeständigkeit aufweisen.

Der Raum zwischen Membran und Membranbett ist in der Regel mit einer Flüssigkeit gefüllt. Um das Membranbett ist ein Randbereich zur Befestigung der Membran mit dem Druckmittlergehäuse vorgesehen. Auf diese Weise kann ein zur Aufnahme der druckübertragenden Flüssigkeit ausgebildeter Zwischenraum geschaffen werden. Im Falle einer Druckbeaufschlagung der Membran wird der Druck über die Flüssigkeit an eine Messvorrichtung weitergeleitet. Durch eine Auslenkung der Membran wird insofern der Druck der Flüssigkeit verändert und kann über eine Kapillarverbindung an ein angeschlossenes Messwerk weitergeleitet und zur Anzeige eines Messwertes genutzt werden. Damit kann über die Membran eine Druckerhöhung oder Druckerniedrigung gemessen und angezeigt werden.

Die in der Regel aus einem Sonderwerkstoff bestehenden Membranen weisen eine Dicke von bis zu 250 µm auf und sind in der Regel so dimensioniert, dass bei maximaler Druckeinwirkung die Membran am Membranbett zur Anlage kommt. Die Membranen müssen mit dem Druckmittlergehäuse des Druckmittlergehäuses formschlüssig verbunden werden. Hierzu wird häufig ein Schweiß-, Löt- oder ein Laserstrahlverfahren verwendet. Diese weisen jedoch bei einer Verwendung gemäß dem Stand der Technik deutliche Nachteile auf.

Eine bekannte Schweißtechnik zum Anschweißen von Membranen ist das sogenannte Wolfram-Inert-Gasschweißen, wobei mit pulsierendem Schweißstrom der zum Anschweißen erforderliche Wärmeeintrag über die Pulsfrequenz oder die Pulshöhe eingestellt wird. Unter dem Wärmeeintrag schmilzt der Membranwerkstoff und die anliegende Dichtfläche des Druckmittlers wird lokal erwärmt und aufgeschmolzen. Das Schmelzbad erstarrt anschließend zu einer Schweißnaht. Nach dem Anschweißen der Membran aus Sonderwerkstoff wird die Membrankammer zwischen der Membran und dem Membranbett evakuiert, sodass die Membran eng an dem Druckmittlergehäuse anliegt.

Während des Anschweißvorgangs vermischen sich die aufgeschmolzenen Materialien. Die so ausgebildete Legierung der Schweißnaht ist ein Mischgefüge. Es hat sich beim Anschweißen von Membranen aus Sonderwerkstoffen gezeigt, dass sich bei einigen Sonderwerkstoffen, wie beispielsweise Hastelloy ein Mischgefüge bilden kann, welches zur Korrosion neigt. Im Einsatz des Druckmittlers kann daher eine solche Schweißnaht oft den hohen Ansprüchen an die Korrosionsbeständigkeit nicht genügen und wird durch Korrosion beschädigt.

Grundsätzlich bekannt ist auch das Verbinden der Membrane mit dem Druckmittlergehäuse durch Laserstrahlschweißen. Dabei werden herkömmliche Laser eingesetzt, deren Impulsspitzenleistung zum Aufschmelzen der zu verschweißenden Materialien ausreicht. Jedoch ist das Laserstrahlschweißen ebenfalls ein Schmelzschweißverfahren, wobei die zum Schmelzschweißen erforderliche Wärme durch Umwandlung der Strahlung beim Auftreffen auf das Werkstück durch Absorption erzeugt wird. Auch bei dem Laserstrahlschweißen kann sich daher ein Mischgefüge bilden, welches, wie bereits beschrieben, für Korrosion anfällig ist.

Bei dem Lötverfahren wird die Membran mit dem Druckmittlergehäuse verbunden, und zwar so, dass auf die Anlage- und Dichtfläche Lot in Form einer Lotpaste oder einer Lotfolie aufgebracht wird. Die Membran wird mit ihrem Randbereich auf die Dichtfläche aufgelegt und durch Erwärmen des Lots wird der Randbereich der Membran und die Dichtfläche miteinander verlötet. Durch die Erwärmung wird das Lot beziehungsweise die Lotfolie zwischen der Membran und dem Druckmittlergehäuse verflüssigt, sodass nach dem Erstarren des flüssigen Lots eine Verbindung zwischen der Membran und dem Druckmittlergehäuse entsteht.

Durch das Verflüssigen allein des Lotes kann eine metallische kontaktierte Verbindung der Membran und dem Druckmittlergehäuse hergestellt werden, ohne die oben beschriebene Gefahr einer zur Korrosion neigenden Legierung zu bilden. Jedoch kann im Randbereich der Membran Flüssigkeit an das Lot gelangen oder sogar, sofern sich im Randbereich kein Lot befinden sollte, zwischen die Membran und dem Druckmittlergehäuse gelangen. Das Lot besteht aus einem anderen Material als die Membran und das Druckmittlergehäuse, sodass mit der anwesenden Feuchtigkeit ein galvanisches Element gebildet wird und Korrosion einsetzt.

Korrosionserscheinungen an der Membran machen regelmäßig einen sofortigen Austausch des gesamten Druckmittlers erforderlich, da bei fortschreitender Korrosion ein Brechen der Membran und ein Austreten des Messmediums die Folge ist. Zudem kann das mit der Membran in Kontakt stehende Messmedium beeinträchtigt werden.

Ein weiterer Nachteil des Lötens der Membran ist, dass Membranen aus Titan nicht bearbeitbar sind. Titanmembranen sind in vielen Einsatzfällen von Druckmittlern besonders vorteilhaft. Zur Herstellung von Druckmittlern mit Titanmembranen kann daher auf das Lötverfahren nicht zurückgegriffen werden.

Aus dem US-Patent 4,046,010 ist ein Plattendruckmittler mit einer Trennmembran bekannt, die bis zum Randbereich des Druckmittlergehäuses reicht. Der Randbereich sowohl des Druckmittlergehäuses als auch der Membran ist flach ausgebildet und vorzugsweise verschweißt. Zwischen der Membran und dem Druckmittlergehäuse liegt ein Dichtungselement.

Aus dem US-Patent 5,495,768 ist ein Druckisolator, welcher mit einem Druckmittlergehäuse ausgestattet ist, bekannt. Dieser Druckisolator verfügt ebenfalls über ein Membranbett und eine Membran mit einem flach ausgebildeten Randbereich der Membran, der auf einen Teil des Gehäuses zu liegen kommt. Ein weiteres Dichtungselement ist hierbei nicht vorgesehen, lediglich ein ringförmiger Kanal zur Aufnahme überschüssigen Lots.

Aus dem US-Patent 4,199,991 ist ein Membrandruckmittler bekannt, der ebenfalls ein Dichtungselement zwischen einer im Randbereich glatt ausgebildeten Membran und dem Druckmittlergehäuse vorsieht.

Der Erfindung liegt die Aufgabe zugrunde, einen Membrandruckmittler zu schaffen, der bei aggressiven und hoch viskosen Medien zum Einsatz kommen kann und dabei ein hohes Maß an Korrosionsbeständigkeit aufweist.

Die erfindungsgemäße Aufgabe wird von Ansprüchen 1 und 11 dadurch gelöst, dass die Membran einen Randbereich aufweist, welcher vom Membranbett ausgehend bis über den Dichtungsbereich hinausgehend ausgedehnt ist, dass im Randbereich der Membran und des Druckmittlergehäuses eine nutenförmige Vertiefung zur Aufnahme einer Dichtung vorgesehen ist, sodass die Dichtung unmittelbar in der Vertiefung liegend an der Membran anliegt, wobei eine Verbindungsnaht zwischen Membran und Druckmittlergehäuse radial außerhalb der Dichtung angeordnet ist. Weitere vorteilhafte Ausgestaltungen der Erfindung ergeben sich aus den Unteransprüchen.

Im Randbereich der Membran und des Druckmittlergehäuses ist eine nutenförmige Vertiefung zur Aufnahme einer Dichtung vorgesehen, sodass die Dichtung unmittelbar in der Vertiefung liegend an der Membran anliegt.

Der wesentliche Vorteil gegenüber dem Stand der Technik ergibt sich aus dem über den Dichtungsbereich hinausgehenden Randbereich der Membran. Somit liegt die Dichtung unmittelbar an der Membran an. Dies erlaubt es, Verbindungstechniken zu verwenden, welche außerhalb der Kontaktfläche der Membran mit dem aggressiven oder hoch viskosen Medium liegen. Die Verbindung zwischen der Membran und dem Membrandruckmittlergehäuse wird in diesem Randbereich außerhalb der Dichtung ausgeführt, dabei sind die bei einem Schweißvorgang entstehenden zur Korrosion neigenden Mischgefüge nicht in Kontakt mit dem aggressiven oder hoch viskosen Medium. Das Mischgefüge korrodiert daher nicht aufgrund der vorgenannten Medien.

Zwischen dem aggressiven oder hoch viskosen Medium und der Verbindung zwischen Membran und Druckmittlergehäuse liegt entsprechend eine Dichtung, welche unmittelbar an der Membran anliegt. Im Randbereich der Membran kann kein Medium oder Feuchtigkeit an das Lot oder die Schweißnaht gelangen, da diese durch die Dichtung separiert ist. Diese Dichtung erlaubt es daher, beispielsweise bei einem Lötvorgang, das Entstehen eines galvanischen Elementes und bei einem Schweißprozess die Korrosion des dabei entstehenden Mischgefüges zu verhindern.

In einer vorteilhaften Ausführungsform weist die Membran für einen Plattendruckmittler neben einer Messfläche und einer typisch wellen- oder trapezförmigen Struktur der Membran im Randbereich eine vorgeprägte Struktur auf, beispielsweise in Form einer nutförmigen Vertiefung zur Aufnahme eines eckigen oder runden Dichtungsringes oder einen flachen Abschnitt zur Anlage eines flachen Dichtungsringes. Diese vorgeprägte Struktur nimmt entsprechend die Dichtung, beispielsweise einen runden oder eckigen Dichtungsring, auf. Hierdurch wird gewährleistet, dass ein aggressives oder hoch viskoses Medium nicht in Kontakt mit dem Randbereich der Membran gelangt und damit nicht in Kontakt mit der Verbindung zwischen Membran und Druckmittlergehäuse kommt. Somit wird das Lot oder die Schweißnaht geschützt. Eine Korrosion oder die Entstehung eines galvanischen Elementes mit der damit einhergehenden Korrosion wird durch die vorgeprägte Struktur zur Aufnahme einer Dichtung verhindert. Aus diesem Grunde ist diese Struktur besonders vorteilhaft, um eine verbesserte Dichtung zu gewährleisten.

Erfindungsgemäß besteht somit die Möglichkeit, die Dichtung innerhalb einer Vertiefung anzuordnen.

In einer besonders vorteilhaften Ausgestaltung ist die Membran mit dem Druckmittlergehäuse im Anlage- oder Auflagebereich vollflächig verlötet. Das Löten der Membran bietet gegenüber dem Schweißen den großen Vorteil, dass keine Schweißnaht vorliegt. Die Schweißnaht ist, wie bereits beschrieben, besonders anfällig für Korrosion. Bei der Verwendung eines Lötprozesses wird eine Schweißnaht komplett vermieden und so auch eine Korrosion außerhalb der Kontaktfläche mit dem aggressiven oder hoch viskosen Medium verhindert.

Weiterhin ist es besonders vorteilhaft, die Membran bei einem Rohrdruckmittler über die innere Axialfläche hinaus bis zur Stirnfläche zumindest teilweise umzubördeln. Das Bördeln der Membran bis zur Stirnfläche verhindert das Eindringen von Feuchtigkeit oder Flüssigkeit in den Randbereichen. Damit wird die Entstehung eines galvanischen Elementes verhindert. Das Lot besteht aus einem anderen Material als die Membran und das Druckmittlergehäuse. Bei Anwesenheit von Feuchtigkeit entsteht somit ein galvanisches Element, wodurch die Gefahr einer Korrosion der Membran im Randbereich besteht. Die Bördelung bietet aber einen zusätzlichen Schutz vor dem Eindringen von Feuchtigkeit in den Dichtungsbereich.

In einer weiteren Ausführungsform weist das Druckmittlergehäuse eines Rohrdruckmittlers eine Struktur, beispielsweise eine Nut, zur Aufnahme einer Dichtung in zumindest einer Stirnfläche und die Membran eine korrespondierende Struktur auf, welche in der Vertiefung der Stirnfläche des Druckmittlergehäuses zumindest teilweise einliegt. Hierbei wird ähnlich wie bei einem Plattendruckmittler die Dichtung durch korrespondierende Vertiefungen beziehungsweise Verformungen des Druckmittlergehäuses und der Membran aufgenommen.

In einer besonders vorteilhaften Ausführungsform ist die Membran mit dem Druckmittlergehäuse bei einem Rohrdruckmittler jeweils endseitig außerhalb des Membranbettes mit der Axialfläche des rohrförmigen Druckmittlergehäuses und/oder der Stirnfläche vollflächig verlötet. Das Löten bietet bei einem Rohrdruckmittler wie bei einem Plattendruckmittler den Vorteil, dass das Verfahren keine Schweißnaht aufweist. Eine Korrosion der Schweißnaht wird somit verhindert.

In einer weiteren vorteilhaften Ausgestaltung weist die Membran eine unrunde Querschnittsform im Bereich des Membranbettes auf oder die Membran weist in Axialrichtung verlaufende Sicken, Einbuchtungen oder tangentiale Abschrägungen im Bereich des Membranbettes auf. Die unrunde Querschnittsform beziehungsweise die in Axialrichtungen verlaufenden Sicken, Einbuchtungen oder tangentialen Abschrägungen der Membran im Bereich des Membranbettes gewährleisten eine erhöhte Flexibilität der Membran. Dies ist insbesondere von Bedeutung, um Drücke mit ausreichender Genauigkeit zu messen, sowie Temperaturschwankungen ohne Beschädigung der Membran auszugleichen.

Die Membran selbst wird in einer Prägevorrichtung, bestehend aus einer Patrize und einer Matrize, vorgeprägt, wobei die Prägevorrichtung mit einem Mediumeinlass versehen ist, damit eine Prägung der Membran vorzugsweise mit Wasserdruck, Luft oder einem anderen Medium erfolgen kann. Die Membran wird hierbei aus einem Sonderwerkstoff gefertigt, vorzugsweise Tantal, V2A, V4A, Titan, Nickel, Monel, Duplex, Inconel oder Hastelloy C 276 oder es wird ein Werkstoff verwendet, der mit einem der Sonderwerkstoffe beschichtet ist, damit die nach dem erfindungsgemäßen Verfahren hergestellten Membran-Druckmittler bei korrosiven oder hochviskosen Messstoffen eingesetzt werden können.

In weiterer Ausgestaltung ist vorgesehen, dass das Verbindungsmittel beispielweise aus einem Lot, vorzugsweise aus einer dünnen Lotfolie besteht, die beispielweise aus einem dünnen Kreisring bestehen kann, der auf die Auflagefläche aufgelegt wird. Das hierbei verwendete Verbindungselement weist eine Dicke von 30 bis 50 µ, vorzugsweise 45 µ auf.

Damit das Verbindungsmittel nicht in den eigentlichen Messraum während der Erwärmung gelangt, ist in besonderer vorteilhafter Ausgestaltung der Erfindung vorgesehen, dass zwischen dem Membranbett und der Auflagefläche des Druckmittlergehäuses ein ringförmiger Einstichkanal eingearbeitet ist, welcher die zwischen den Kontaktflächen entstehende Kapillarwirkung unterbricht und somit verhindert, dass das Verbindungsmittel in die Struktur des Membranbettes gelangt oder an der Struktur der Membran anhaftet. Durch den verwendeten Einstichkanal wird ein Eindringen des Verbindungsmittels in den Zwischenraum zwischen der Membran und dem Druckmittlergehäuse somit ausgeschlossen und zudem kann gegebenenfalls überschüssiges Verbindungsmittel durch den Einstichkanal aufgenommen werden.

Sowohl bei einem Membrandruckmittler als auch bei einem Rohrdruckmittler kann hierbei das Druckmittlergehäuse und die Membran im Randbereich vollflächig verlötet sein. Die vollflächige Verlötung bietet hierbei den Vorteil, sofern beispielsweise sowohl für die Membran als auch für das Druckmittlergehäuse Edelstahl verwendet wird, beispielsweise V2A oder V4A, eine gute Verbindungsmöglichkeit, die unter Berücksichtigung der Anordnung des Dichtungselementes eine lange Lebensdauer gewährleistet. Der besondere Vorteil besteht hierbei darin, dass mithilfe des Lötens Edelstahlmaterialien miteinander verbunden werden können, die ansonsten nur verschweißbar sind.

Der Erfindung liegt im Weiteren die Aufgabe zugrunde, ein Verfahren aufzuzeigen, um die Membran mit dem Druckmittlergehäuse zu verbinden.

Erfindungsgemäß ist zur Lösung der Verfahrensaufgabe vorgesehen, dass ein auf die jeweilige Größe der Auflagefläche zugeschnittenes Verbindungsmittel in einer Dicke von 40 bis 50 µ vorgesehen ist, sowie ein Auflegen der vorgeformten Membran mit ihrem ebenen Randbereich auf das Verbindungsmittel, Erzeugen einer Andruckkraft gegen die Membran und das Verbindungsmittel und Verlöten der Membran mit dem Druckmittlergehäuse unter Hochvakuum für die Dauer einer Stunde oberhalb des Schmelzpunktes des Verbindungsmittels und anschließender längerer Abkühlphase von zumindest einer Stunde. Weitere vorteilhafte Ausgestaltungen der Erfindung sind den Unteransprüchen zu entnehmen.

Die Herstellung eines Membrandruckmittlers mit einer bereits vorgeformten Membran führt bei Einhaltung der aufgezeigten Verfahrensschritte zu einer äußerst geringen Restspannung, die im Übrigen durch die vorhandene Struktur der Membran sei es in Sinus- oder Trapezform aufgenommen werden und somit eine nur geringe Beeinflussungen des K-Faktors nach sich ziehen. Die hierbei verwendeten Materialien weisen zwar wie bei den bekannten Verfahren unterschiedliche Temperaturausdehnungskoeffizienten auf, weil beispielweise für das Membrandruckmittlergehäuse ein geeigneter Stahl verwendet wird, während für die Membran in der Regel ein Sonderwerkstoff eingesetzt wird.

Durch die vorherige Prägung der Membran in einer Prägevorrichtung, bestehend aus einer Patrize und Matrize, ohne dass der Randbereich bereits ortsfest fixiert ist, besteht die Möglichkeit, das Material vollflächig aus der Membran zu prägen, wobei das notwendige Material zur Ausbildung der Wellenform großflächig aus dem gesamten Membranmaterial gezogen werden kann. Dies ist beispielweise bei einer bereits verlöteten Membran nur innerhalb der verringerten Membranfläche möglich, die nicht fest mit dem Druckmittlergehäuse verbunden ist. Der vorhandene Überschuss an Material infolge des stärkeren Zusammenziehens des Druckmittlergehäuses reicht jedoch nicht aus, die Struktur vollständig spannungsfrei zu Prägen. Dieser Vorteil wirkt sich jedoch bei einer vorherigen Prägung der Membran deutlich aus, sodass die Membran insbesondere der wirksame Membrandurchmesser nahezu spannungsfrei hergestellt werden kann. Nach erfolgter Verbindung mit dem Druckmittlergehäuse, welcher sich aufgrund seines höheren Temperaturausdehnungskoeffizferrten stärker kontrahiert als die Membran, wird die konzentrisch vorgegebene Membranstruktur in vorteilhafter Weise nicht nach außen, sondern mehr zum Zentrum der Messfläche infolge der entstehenden Schubkraft gedrückt, wobei die konzentrische Struktur infolge der vorhandenen Wellenstruktur diese Verformung wesentlich besser kompensieren kann.

Damit kein unnötiger Spannungsaufbau in der Membran entsteht wird das gesamte Druckmittlergehäuse zusammen mit der Membran auf eine Temperatur oberhalb des Schmelzpunktes des Verbindungsmittels erwärmt und anschließend abgekühlt. Das hierfür vorgesehene Verbindungsmittel beispielweise ein metallisches Verbindungsmittel wird vollflächig zwischen der Auflagefläche und dem Randbereich der Membran angeordnet, sodass eine vollflächige homogene Verbindung des gesamten Randbereichs der Membran mit der Auflagefläche des Druckmittlergehäuses entsteht. Hierbei wird zunächst das Verbindungsmittel auf die Auflage aufgelegt und sodann die Membran auf das Verbindungsmittel aufgelegt und durch Erzeugen einer Andruckkraft die Membran mit dem Verbindungsmittel gegen die Auflagefläche des Druckmittlergehäuses gepresst, damit während der Erwärmung keine Verwerfungen entstehen und die Membran vollflächig und eben auf der Auflagefläche liegen bleibt, während das Verbindungsmittel in eine flüssige Phase übergeht und eine metallische Verbindung zwischen der Auflagefläche und dem Randbereich der Membran herstellt.

Die Temperaturerwärmung erfolgt für einen Zeitraum von bis zu einer Stunde, woran sich eine längere Abkühlphase anschließt, damit die Membran und der Druckmittlergehäuse während der Abkühlphase keine zusätzlichen Spannungen aufbauen. In bevorzugter Anwendung des aufgezeigten Verfahrens wird hierbei die metallische Verbindung unter einem Hochvakuum erstellt, sodass Verunreinigungen und Oxyde auf der Oberfläche des Druckmittlergehäuses und der Membran vermieden werden. Hierdurch entsteht eine äußerst blanke Oberfläche beider zu verbindender Teile des Membrandruckmittlers, sodass eine qualitativ äußerst hochwertige Verbindung mit einem hohen Reproduktionsfaktor entsteht. Durch den Einsatz eines Hochvakuumofens wird ferner ein Anlaufen der verwendeten Materialien verhindert, sodass der fertiggestellte Membrandruckmittler eine absolut rein wirkende Oberfläche aufweist. Aus diesem Grunde eignen sich derartige Membrandruckmittler beispielweise für den Einsatz in der chemischen Industrie oder Nahrungsmittelindustrie, da das fertige Produkt einen optisch absolut sauberen Eindruck hinterlässt. Eine Blasenbildung oder Verwerfung der Membran im Auflagebereich wird hierbei durch die aufgebrachte Andruckkraft verhindert und zudem eine vollflächige Verbindung zwischen der Membran und der Auflagefläche durch das verwendete Verbindungsmittel erreicht, da unerwünschte Verunreinigungen oder Oxyde an den Oberflächen der verwendeten Materialien infolge der unter Hochvakuum durchgeführten Erwärmung vermieden werden und somit hochreine Oberflächen für die metallische Verbindung zur Verfügung stellen. Der gleichmäßige Andruck der Membrane und des Verbindungsmittels auf die hierfür vorgesehene Auflagefläche des Druckmittlergehäuses erfolgt durch ein Andruckgewicht.

Durch das aufgezeigte erfindungsgemäße Verfahren wird der besondere Vorteil erzielt, dass bei der vorherigen Prägung der Membran das zur Ausbildung der Membranstruktur notwendige Material aus einer großen Fläche nachgezogen werden kann und somit Spannungen in der geprägten Membran verhindert werden. Ferner wird durch das aufgezeigte Verfahren zur Verbindung der Membran mit der Auflagefläche des Druckmittlergehäuses infolge der gleichmäßigen Erwärmung des gesamten Druckmittlergehäuses mit der Membran und einer längeren Abkühlphase von 1 bis 3 Stunden verhindert, dass nach erfolgter Verbindung zwischen Membran und Druckmittlergehäuse Spannungen entstehen. Soweit Spannungen unvermeidlich sind, können diese in vorteilhafter Weise durch die vorhandene Membranstruktur nahezu vollständig kompensiert werden. Hierdurch wird eine hervorragende Linearität des Membrandruckmittlers erreicht. Durch den Einsatz eines Hochvakuumofens wird ferner ein Anlaufen der verwendeten Materialien verhindert, sodass der fertiggestetlte Membrandruckmittler eine absolut rein wirkende Oberfläche aufweist. Eine Blasenbildung oder Verwerfung der Membran im Auflagebereich wird hierbei durch die erzielte Andruckkraft verhindert und zudem eine vollflächige Verbindung zwischen der Membran und der Auflagefläche durch das verwendete Verbindungsmittel erreicht, da unerwünschte Verunreinigungen oder Oxyde an den Oberflächen der verwendeten Materialien infolge der unter Hochvakuum durchgeführten Erwärmung vermieden werden und somit hochreine Oberflächen für die metallische Verbindung zur Verfügung stehen.

In einer besonders vorteilhaften Ausgestaltung ist das Membrandruckmittlergehäuse und die Membran aus Edelstahl, beispielsweise V2A oder V4A hergestellt. Edelstahl und insbesondere V2A oder V4A weist eine besonders hohe Korrosionsbeständigkeit auf und bietet sich daher zum Einsatz bei aggressiven oder hoch viskosen Medien an. Membrandruckmittlergehäuse weisen bei der Verwendung von Edelstahl eine ausreichende Haltbarkeit auf.

In einer weiterhin besonders vorteilhaften Ausgestaltung ist das Druckmittlergehäuse und/oder die Membran aus einem Sonderwerkstoff, vorzugsweise Tantal, Titan, Nickel, Monel, Duplex, Inconnel oder Hastelloy C276 oder mit einem Sonderwerkstoff der vorgenannten Art beschichtet. Um die Korrosion und den damit einhergehenden Ausfall des Druckmittlers zu verhindern, ist in jedem Fall die Membran aus einem solchen Sonderwerkstoff hergestellt oder damit beschichtet. Um Kosten einzusparen, kann das Druckmittlergehäuse aus Edelstahl bestehen. Um weiterhin Kosten auch bei hohen Ansprüchen einzusparen, kann beispielsweise Edelstahl mit einem dieser Sonderwerkstoffe beschichtet werden. Für besonders hohe Anforderungen und eine besonders hohe Korrosionsbeständigkeit kann das Druckmittlergehäuse ebenfalls aus einem dieser Sonderwerkstoffe bestehen.

Die Erfindung wird im Weiteren anhand der Figuren näher erläutert.

Es zeigt
- Fig. 1: in einer perspektivischen Ansicht einen als Plattendruckmittler ausgebildeten Membrandruckmittler,
- Fig. 2: einen Querschnitt eines Membrandruckmittlers mit einer über den Dichtungsbereich hinausgehenden Membran,
- Fig. 3: in einer perspektivischen Ansicht ein weiteres Ausführungsbeispiel eines Membrandruckmittlers,
- Fig. 4: in einer perspektivischen Ansicht den aus Figur 3 bekannten Membrandruckmittler,
- Fig. 5: in einer perspektivischen Ansicht ein weiteres Ausführungsbeispiel eines Membrandruckmittlers,
- Fig. 6: in einer perspektivischen Ansicht, teilweise geschnittenen Ansicht den aus Figur 5 bekannten Membrandruckmittler,
- Fig. 7: in einer perspektivischen Ansicht eine weitere Ausführungsform eines Membrandruckmittlers,
- Fig. 8: in einer teilweise geschnittenen perspektivischen Ansicht einen Membrandruckmittler gemäß Figur 7,
- Fig. 9: ein weiteres Ausführungsbeispiel eines Membrandruckmittlers,
- Fig. 10: in einer teilweise geschnittenen Ansicht den aus Figur 9 bekannten Membranrfruckmittler,
- Fig. 11: ein weiteres Ausführungsbeispiel eines Membrandruckmittlers und
- Fig. 12: in einer teilweise geschnittenen perspektivischen Ansicht den Membrandruckmittler gemäß Figur 11.

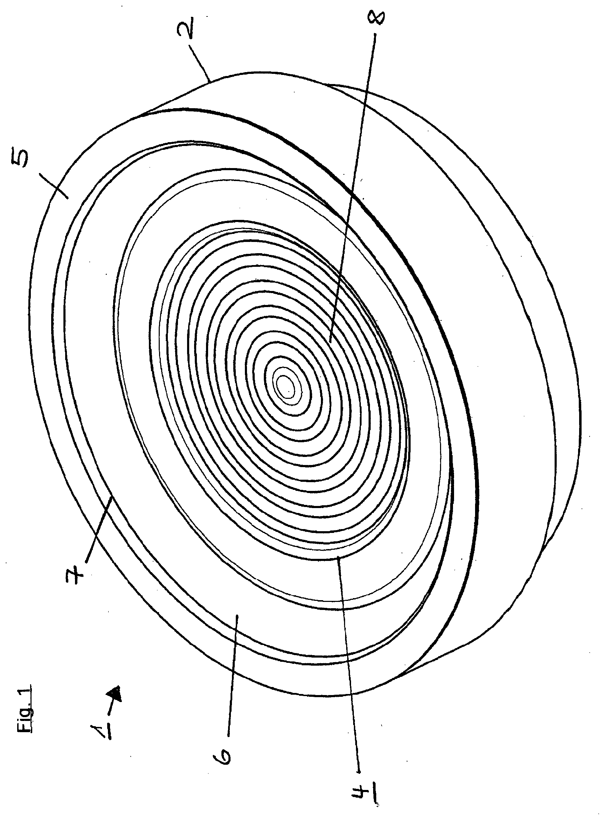

Figur 1 zeigt einen als Plattendruckmittler ausgebildeten Membrandruckmittler 1 mit einem Membrandruckmittlergehäuse 2. Das Membrandruckmittlergehäuse 2 ist dabei beispielsweise aus Edelstahl wie V2A oder V4A gefertigt. In einer besonders vorteilhaften Ausgestaltung kann das Membrandruckmittlergehäuse 2 aus einem Sonderwerkstoff hergestellt sein. Dies ist beispielsweise bei besonders anspruchsvollen Anwendungen notwendig, um eine hohe Korrosionsbeständigkeit des Membrandruckmittlergehäuses 2 zu gewährleisten. Das Membrandruckmittlergehäuse 2 ist auf der Messseite mit einem hier nicht dargestellten Membranbett 3 und einer Membran 4 versehen. Die Membran 4 dargestellten Membranbett 3 und einer Membran 4 versehen. Die Membran 4 ist form- und kraftschlüssig mit dem Membrandruckmittlergehäuse 2 verbunden. Hierzu werden beispielsweise Schweiß-, Löt- oder Laserverfahren verwendet. Um eine Korrosionsbeständigkeit des Membrandruckmittlers 1 und insbesondere der Membran 4 zu gewährleisten, weist die Membran 4 einen Randbereich 5 auf. Dieser ist vom Membranbett 3 ausgehend bis über den Dichtungsbereich 6 hinausgehend ausgedehnt. Damit liegt eine Dichtung 7 unmittelbar an der Membran 3 an. Dies ist von besonderer Bedeutung, da unter Umständen an einer Messfläche 8 der Membran 4 ein aggressives oder hoch viskoses Medium anliegt. Dieses Medium kann zur Korrosion einer Schweißnaht beim Einsatz eines Schweißverfahrens zur Verbindung der Membran 4 mit dem Membrandruckmittlergehäuse 2 führen. Weiterhin kann beim Einsatz von Lötverfahren ein galvanisches Element entstehen, welches die Korrosion der Membran 4 fördert. Die Membran 4 wird mit dem Membrandruckmittlergehäuse 2 in einer besonders vorteilhaften Ausgestaltung im Randbereich 5 verbunden. Der Dichtungsbereich 6 wird dabei mit einer Dichtung 7 versehen. Damit ist das an der Membran 4 anliegende Medium örtlich getrennt von beispielsweise einer Schweißnaht zwischen der Membran 4 und dem Membrandruckmittlergehäuse 2 oder dem verlöteten Rand der Membran. Damit kann ein kostengünstig mit einem Schweiß- oder Lötverfahren hergestellter Membrandruckmittler 1 auch für besonders aggressive Medien benutzt werden.

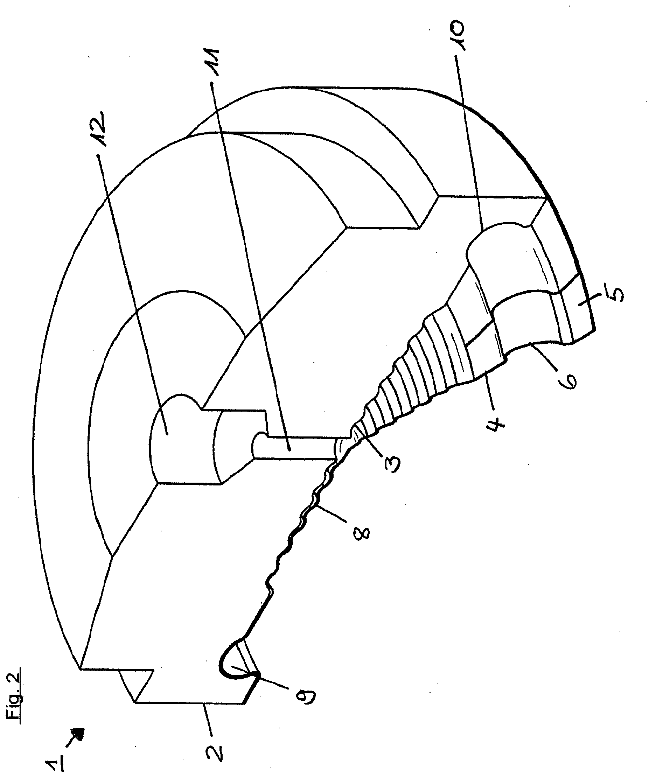

Figur 2 zeigt in einem Querschnitt einen als Plattendruckmittler ausgebildeten Membrandruckmittler 1 mit einem Membrandruckmittlergehäuse 2. Das Membrandruckmittlergehäuse 2 weist ein Membranbett 3 auf, welches im Bereich der Messfläche 8 mit einer wellen- oder trapezförmigen Struktur versehen ist. Zusammen mit der Membran 4 bildet das Membranbrett 3 einen Hohlraum, der mit einer Flüssigkeit gefüllt wird. Wird die Membran 4 mit Druck beaufschlagt, so überträgt sich der Druck über die Flüssigkeit zwischen der Membran 4 und dem Membranbett 3 auf eine hier nicht dargestellte Messvorrichtung. Die Membran 4 ist wie das Membranbett 3 mit einer wellen- oder trapezförmigen Struktur versehen. Diese ermöglicht eine hohe Flexibilität der Membran 4 und einen weiten Einsatzbereich. Die Membran 4 weist neben der Messfläche 8 den Randbereich 5 auf. Dieser Randbereich weist eine vorgeprägte Struktur 9 auf. In diesem Ausführungsbeispiel ist die Struktur 9 in Form einer nutförmigen Vertiefung zur Aufnahme eines Dichtungsringes ausgebildet. Weiterhin weist in dieser Ausführungsform das Membrandruckmittlergehäuse 2 eine zur Struktur 9 korrespondierende Struktur 10 auf. Die Struktur 10 ist entsprechend der Struktur 9 hier als Nut zur Aufnahme einer Dichtung ausgebildet. Die Verbindung zwischen Membrandruckmittlergehäuse 2 und der Membran 4 ist im Randbereich 5 in einer besonders vorteilhaften Ausgestaltung außerhalb des Dichtungsbereiches 6 vorgesehen. Damit wird der Kontakt zwischen dem zu messenden Medium und der Verbindung zwischen der Membran 4 und dem Membrandruckmittlergehäuse 2 vermieden. Dies ist insbesondere bei einer Schweißverbindung zwischen Membrandruckmittfergehäuse 2 und Membran 4 notwendig, um die Korrosion der dabei entstehenden Schweißnaht zu verhindern. Bei Druckbeaufschlagung wird die zwischen der Membran 4 und dem Membranbett 3 befindliche Messflüssigkeit über eine Kapillare 11 und eine Messkammer 12 mit einer nicht dargestellten Messvorrichtung verbunden.

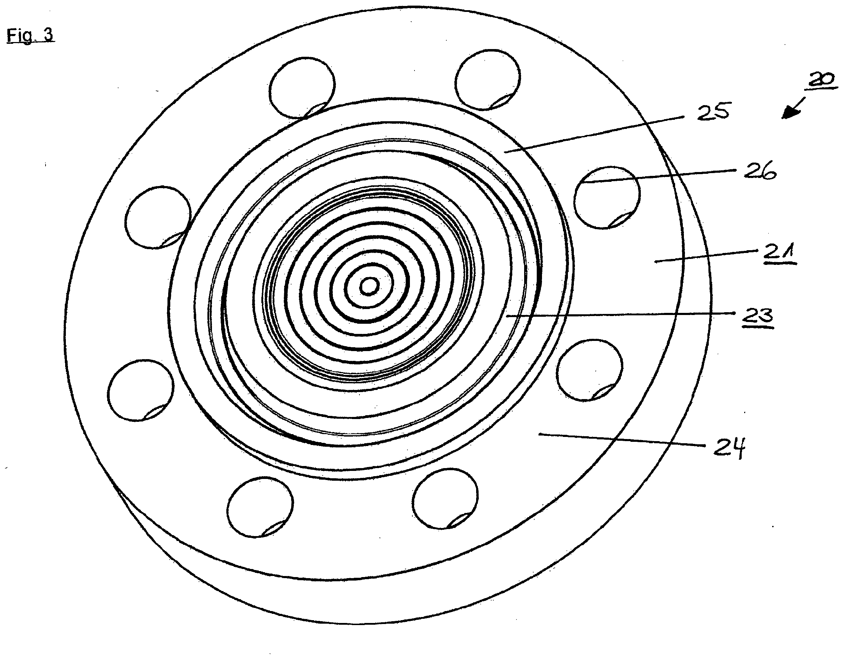

Figur 3 zeigt in einer perspektivischen Ansicht ein weiteres Ausführungsbeispiel eines Membrandruckmittlers 20 mit einem Membrandruckmittlergehäuse 21. Das Membrandruckmittlergehäuse 21 ist beispielsweise aus Edelstahl wie V2A oder V4A gefertigt. Es besteht aber auch die Möglichkeit, das Membrandruckmittlergehäuse 21 aus einem Sonderwerkstoff herzustellen. Das Membrandruckmittlergehäuse ist auf der Messseite mit einem Membranbett 27 ausgestattet, über dem sich eine Membran 23 befindet. Die Membran 23 ist wie bei dem vorhergehenden Beispiel form- und kraftschlüssig mit dem Membrandruckmittlergehäuse 21 verbunden. Hierzu wird vorzugsweise ein Lötverfahren eingesetzt, um eine Korrosionsbeständigkeit des Membrandruckmittlers 21 und insbesondere der Membran 23 zu gewährleisten. Die Membran 23 weist einen Randbereich 24 auf, welcher sich ausgehend vom Membranbett bis über den Dichtungsbereich 25 erstreckt. Somit kann eine Dichtung unmittelbar an der Membran 23 anliegen. Durch diese Maßnahme wird insbesondere erreicht, dass ein aggressives oder hochviskoses Medium nicht mit dem Membrandruckmittlergehäuse 21 in Berührung kommt. Durch das angewendete Lötverfahren ist die Membran 23 vollflächig mit dem Membrandruckmittlergehäuse 21 verbunden. In dieser speziellen Ausführung weist das Membran-Membrandruckmittlergehäuse 21 mehrere umfangsverteilte Bohrungen 26 auf, die zur Herstellung einer Flanschverbindung mit Rohrleitungen etc. vorgesehen sind.

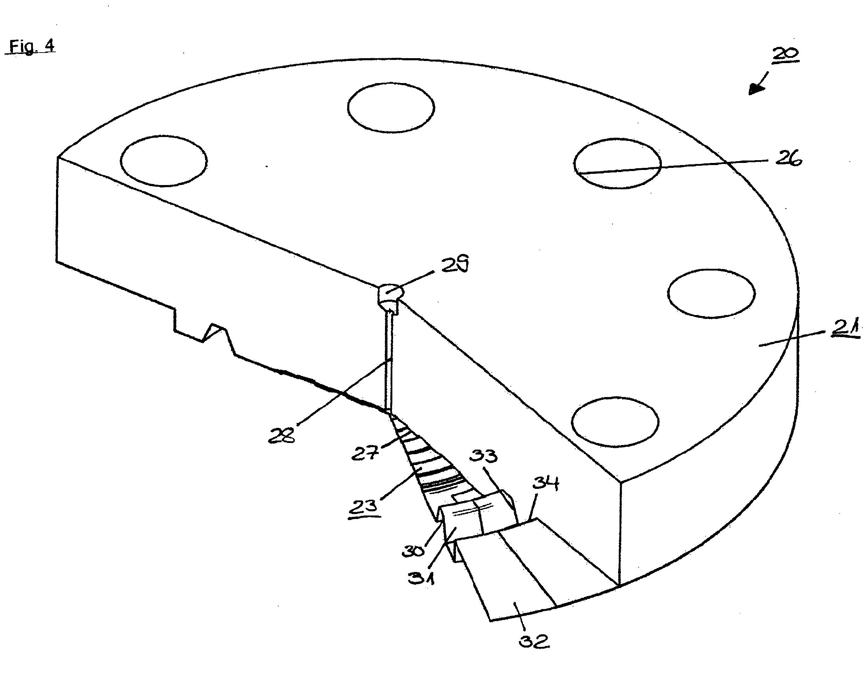

Figur 4 zeigt in einer perspektivischen Ansicht den aus Figur 3 bekannten Membrandruckmittler 20, wobei dieser in einer teilweise geschnittenen Form dargestellt ist, sodass einerseits das Membranbett 27 und andererseits die Membran 23 deutlich erkennbar ist. Zwischen Membranbett 27 und Membran 23 besteht hierbei ein Luftspalt als Druckraum 35, der ggf. mit einem Übertragungsmedium gefüllt sein kann, sodass über einen Stichkanal 28 mit einer vergrößerten Ausnehmung 29, die vorzugsweise auch als Innengewinde ausgebildet sein kann, ein Messwerk angeschlossen werden kann. Aus dieser Ansicht ist darüber hinaus ersichtlich, dass die Membran eine konzentrische Trapezstruktur aufweist, die auf den mittleren Messbereich begrenzt ist und die Membran im Anschluss zwei trapezförmige Ausformungen 30, 31 und im äußersten Randbereich 32 einen ebenen Verlauf aufweist. Die Membran ist hierbei passgenau an das Membrandruckmittlergehäuse 21 angeformt, welches ebenfalls trapezförmige Ausnehmungen 33, 34 aufweist. In den trapezförmigen Ausnehmungen 30 kann beispielsweise ein Dichtungselement eingelegt werden, um somit den inneren Messbereich vollständig abzudichten, damit kein Medium an das Membrandruckmittlergehäuse 21 gelangt.

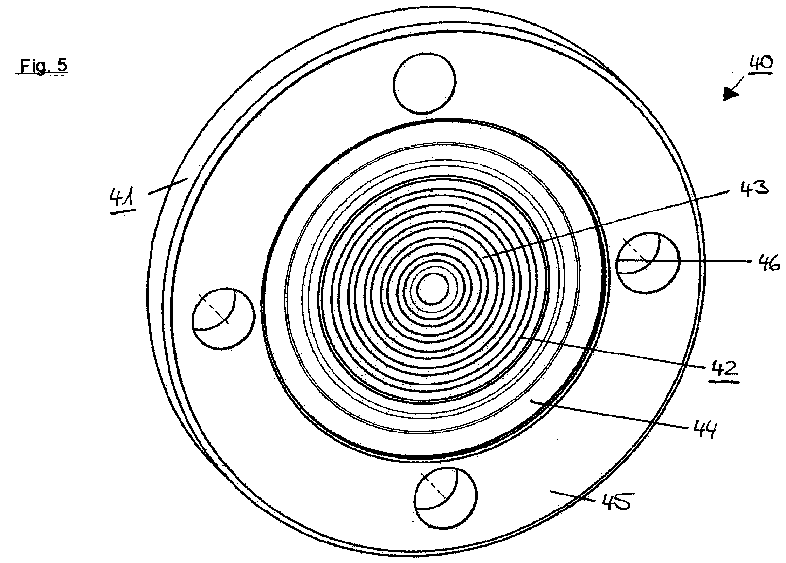

Figur 5 zeigt in einer perspektivischen Ansicht ein weiteres Ausführungsbeispiel eines Membrandruckmittlers 40, welcher wiederum aus einem Membrandruckmittlergehäuse 41 und einer Membran 42 besteht. Die Membran 42 ist mit dem Membrandruckmittlergehäuse 41 vollflächig im Randbereich verlötet. Die Membran 42 weist hierbei einen konzentrischen Messbereich 43 auf, der in diesem Fall sinusförmig ausgebildet ist, wobei der Messbereich 43 anschließend in eine Vertiefung 44 übergeht und letztendlich besitzt die Membran 42 einen radial außen liegenden abgeflachten Bereich 45. Sowohl die Membran 42 als auch das Membrandruckmittlergehäuse 41 ist wiederum mit Bohrungen 46 versehen, sodass der Membrandruckmittler 40 mit vorhandenen Rohrleitungen verbunden werden kann.

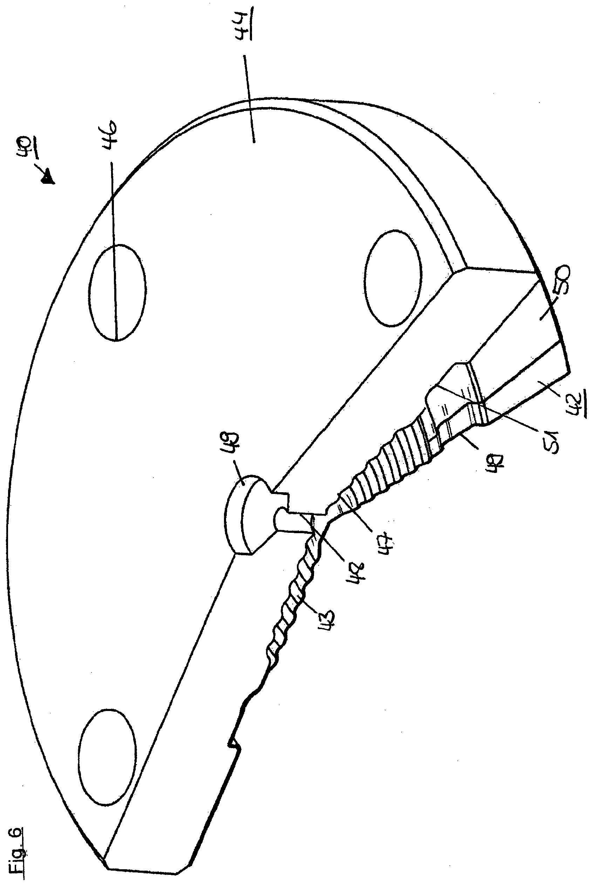

Figur 6 zeigt den aus Figur 5 bekannten Membrandruckmittler 40 in einer perspektivischen Ansicht in einer teilweise geschnittenen Ansicht. Das Membrandruckmittlergehäuse 41 ist mit der Membran 42 verlötet, wobei aus dieser Ansicht ersichtlich ist, dass das Membrandruckmittlergehäuse 41 mit einem Membranbett 47 ausgestattet ist und die Membran 42 dem Membranbett 47 gegenüberliegend angeordnet ist. Auch in diesem Fall befindet sich zwischen Membran 42 und Membranbett 47 ein Druckraum 52 der ggf. mit einem Übertragungsmedium gefüllt sein kann. Die Membran 42 ist mit einem sinusförmigen Messbereich 43 ausgestattet und weist zum radialen Rand hin eine trapezförmige Vertiefung 49 auf, in welcher ein Dichtungselement zu liegen kommen kann, und geht anschließend in einen ebenen Bereich 50 über. Das Membrandruckmittlergehäuse 41 ist ebenso mit einer korrespondierenden Vertiefung 51 ausgestattet, sodass die Membran vollflächig an dem Membrandruckmittlergehäuse 41 anliegen kann.

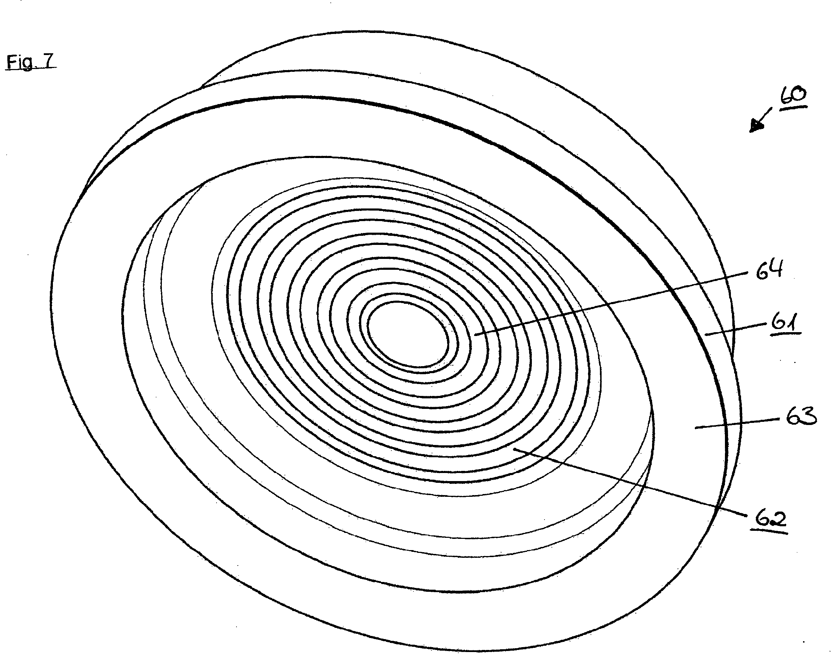

Figur 7 zeigt in einer perspektivischen Ansicht eine weitere Ausführungsform eines Membrandruckmittlers 60 mit einem Membrandruckmittlergehäuse 61 und einer Membran 62. Dieser Membrandruckmittler 60 ist topfförmig ausgebildet und weist einen erhöhten Randbereich 63 auf. Somit benötigt dieser Membrandruckmittler 60 keine Bohrung für eventuelle Schraubanschlüsse, sondern es kann von außen eine Verklemmung mit vorhandenen Rohrleitungen erfolgen.

Die Membran 62 ist wiederum ähnlich den vorhergehenden Ausführungsbeispielen aufgebaut und weist einen konzentrischen Messbereich 64 auf, wobei sich die Membran an das Membrandruckmittlergehäuse 61 insofern anschmiegt und bis in den äußersten Randbereich des Membrandruckmittlers 60 verläuft. Die Verbindung zwischen Membrandruckmittlergehäuse 61 und Membran 62 erfolgt wiederum durch ein vollflächiges Verlöten, wobei die Verbindungsnaht somit außerhalb des Kontaktbereiches, das heißt außerhalb des Dichtungsbereiches, ausgebildet ist und eventuelle hoch viskose oder aggressive Medien nur mit der Membran 62 in Berührung kommen.

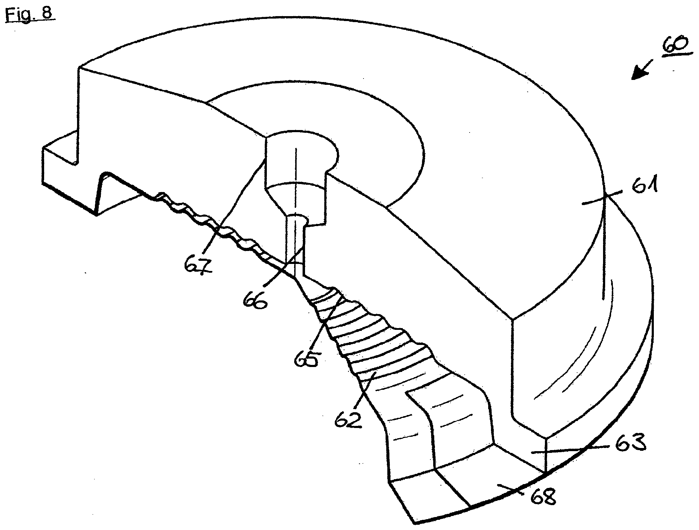

Figur 8 zeigt in einer perspektivischen teilweise geschnittenen Ansicht den Membrandruckmittler 60 gemäß Figur 7. Aus dieser Ansicht wird deutlich, dass das Membrandruckmittlergehäuse 61 topfförmig ausgebildet ist und einen erhöhten Randbereich 63 aufweist. Das Membrandruckmittlergehäuse 61 verfügt im Weiteren über ein Membranbett 65, dem die Membran 62 gegenüberliegt. Zwischen Membran 62 und Membranbett 65 ist wiederum ein Luftspalt als Druckraum 69 vorhanden, der mit einem Übertragungsmedium gefüllt werden kann, wobei über einen Stichkanal 66 und einer Ausnehmung 67 ein Messwerk angeschlossen werden kann. Die Membran 62 erstreckt sich über den eigentlichen Messbereich hinaus bis in den erhöhten Randbereich 63 des Membrandruckmittlergehäuses 61 und liegt flächig an dem Membrandruckmittlergehäuse 61 zum Verlöten an. In der teilweise geschnittenen Ansicht wird hierbei deutlich, dass sich eine Lötfolie 68 vom Randbereich ausgehend bis zur stufenförmigen Absetzung des Membrandruckmittlergehäuses 61 erstreckt. Eine mögliche Dichtung kann beispielsweise in der stufenförmigen Ausformung einliegen oder an dem erhöhten Randbereich 63.

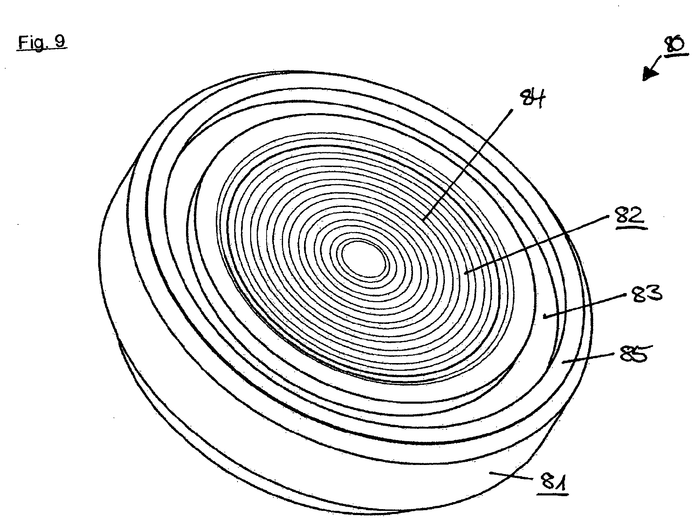

Figur 9 zeigt ein weiteres Ausführungsbeispiel eines Membrandruckmittlers 80, der wiederum aus einem Membrandruckmittlergehäuse 81 und einer Membran 82 besteht. Sowohl die Membran 82 als auch das Membrandruckmittlergehäuse 81 ist mit einer rechteckförmigen Einsenkung 83 ausgestattet, die zur Aufnahme eines Dichtungselementes vorgesehen ist. Ausgehend vom Messbereich 84 der Membran 82 schmiegt sich die Membran 82 an die trapezförmige Einsenkung 83 an und erstreckt sich hierbei bis in den äußersten Randbereich 85. Auch die Membran 82 kann somit mit dem Membrandruckmittlergehäuse 81 flächig verlötet werden.

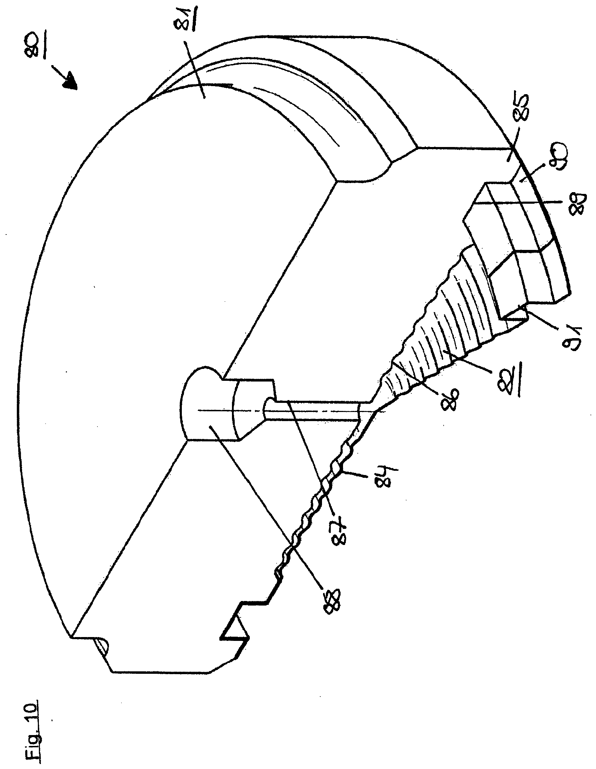

Figur 10 zeigt in einer teilweise geschnittenen perspektivischen Ansicht den aus Figur 9 bekannten Membrandruckmittler 80 mit Membrandruckmittlergehäuse 81 und Membran 82. Das Membrandruckmittlergehäuse 81 weist wiederum ein Membranbett 86 auf, dem die Membran 82 mit ihrem inneren Messbereich 84 gegenüberliegt. Der Luftspalt zwischen Membran 82 und Membranbett 86 bildet einen Druckraum 92, der mit einem Übertragungsmedium gefüllt sein kann, sodass über einen Stichkanal 87 mit einer Ausnehmung 88 eine Verbindung mit einem Messwerk hergestellt werden kann. Aus dieser Ansicht wird wiederum deutlich, dass das Membrandruckmittlergehäuse 81 mit einer annähernd rechteckförmigen Ausnehmung 89 ausgestattet ist und die Membran 82 über die Ausnehmung 89 sich bis in den Randbereich 85 erstreckt. Die Membran 82 weist hierbei einen annähernd identischen Konturenverlauf auf, wobei eine Lötfolie 90 zur Verbindung zwischen Membrandruckmittlergehäuse 81 und Membran 82 angeordnet ist. Die Ausnehmung 89 des Membrandruckmittlers und eine annähernd identisch ausgebildete Vertiefung 91 der Membran 82 dient hierbei zur Aufnahme eines Dichtungselementes.

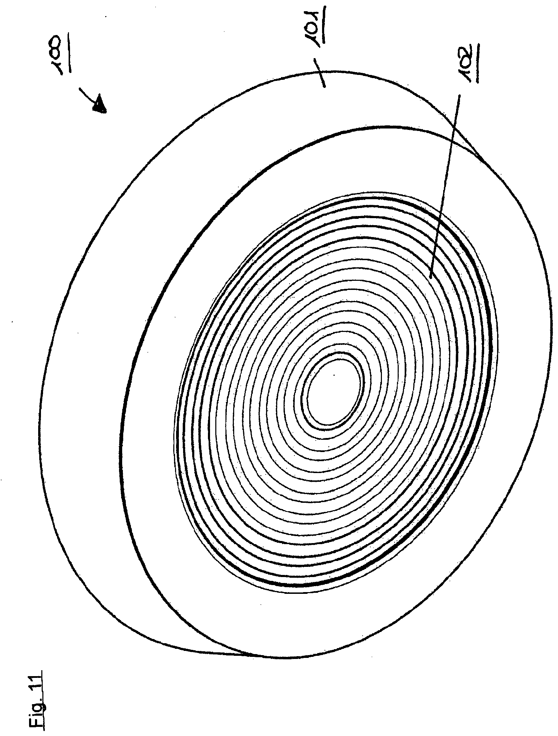

Figur 11 zeigt in einer perspektivischen Ansicht ein weiteres Ausführungsbeispiel eines Membrandruckmittlers 100, der aus einem Membrandruckmittlergehäuse 101 und einer Membran 102 besteht.

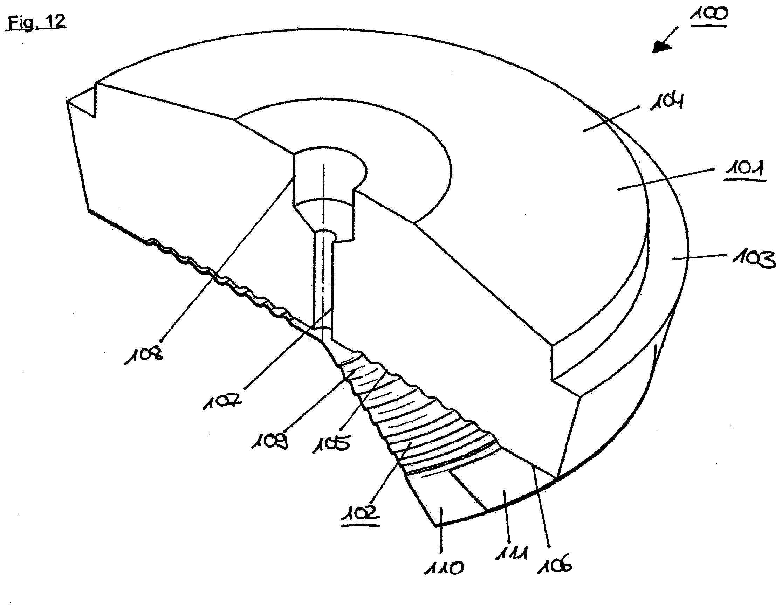

Figur 12 zeigt den Membrandruckmittler 100 in einer teilweise geschnittenen perspektivischen Ansicht, woraus deutlich wird, dass das Membrandruckmittlergehäuse 101 auf der Außenkontur einen stufenförmigen Absatz 103 und eine leicht gewölbte Oberfläche 104 aufweist, während auf der gegenüberliegenden Seite einerseits das Membranbett 105 ausgebildet ist und ein ebener flacher Randbereich 106. Dem Membranbett 105 liegt die Membran 102 gegenüber, sodass ein Luftspalt als Druckraum 112 vorliegt, der mit einem Übertragungsmedium gefüllt werden kann. Über einen Stichkanal 107 und eine Ausnehmung 108 besteht wiederum die Möglichkeit, ein Messwerk anzuschließen. Im gezeigten Ausführungsbeispiel ist die Membran 102 eben ausgebildet und weist im mittleren Bereich den Messbereich 109 auf, der in einem flachen Abschnitt 110 übergeht. Zwischen dem flachen Abschnitt 110 und dem äußeren Randbereich 106 des Membrandruckmittlergehäuses 101 ist eine Lötfolie 111 angeordnet, die zum Verlöten sowohl des Membrandruckmittlergehäuses 101 als auch der Membran 102 verwendet wird.

### Bezugszeichen liste

- 1: Membrandruckmittler
- 2: Membrandruckmittlergehäuse
- 3: Membranbett
- 4: Membran
- 5: Randbereich
- 6: Dichtungsbereich
- 7: Dichtung
- 8: Messfläche
- 9: Struktur
- 10: Struktur
- 11: Kapillare
- 12: Messkammer
- 20: Membrandruckmittter
- 21: Membrandruckmittlergehäuse
- 23: Membran
- 24: Randbereich
- 25: Dichtungsbereich
- 26: Bohrung
- 27: Membranbett
- 28: Stichkanal
- 29: Ausnehmung
- 30: Ausformung
- 31: Ausformung
- 32: Randbereich
- 33: Ausnehmung
- 34: Ausnehmung
- 35: Druckraum
- 40: Membrandruckmittler
- 41: Membrandruckmittlergehäuse
- 101: Membrandruckmittlergehäuse
- 102: Membran
- 103: Absatz
- 104: Oberfläche.
- 105: Membranbett
- 106: Randbereich
- 107: Stichkanal
- 108: Ausnehmung
- 109: Messbereich
- 110: Abschnitt
- 111: Lötfolie
- 112: Druckraum

## Patentansprüche

1. Membrandruckmittler (1, 20, 40, 60, 80, 100), insbesondere zum Einsatz bei aggressiven oder hochviskosen Medien, vorzugsweise in Form eines Platten- oder Rohrdruckmittlers, umfassend zumindest ein Druckmittlergehäuse mit einem in einer Ausnehmung eingelassenen Membranbett (3, 27, 47, 65, 105) und einer Membran (4, 23, 42, 62, 82, 102), welche fluiddicht dem Membranbett (3, 27, 47, 65, 105) gegenüberliegend befestigt ist, **dadurch gekennzeichnet,**
**dass** die Membran (4, 23, 42, 62, 82, 102) einen Randbereich (5, 24, 63, 106) aufweist, welcher vom Membranbett (3, 27, 47, 65, 105) ausgehend bis über den Dichtungsbereich (6, 25) hinausgehend ausgedehnt ist, sodass im Randbereich (5, 24, 63, 106) der Membran (4, 23, 42, 62, 82, 102) und des Druckmittlergehäuses eine nutenförmige Vertiefung zur Aufnahme einer Dichtung (7) vorgesehen ist, sodass die Dichtung (7) unmittelbar in der Vertiefung liegend an der Membran (4, 23, 42, 62, 82, 102) anliegt, wobei eine Verbindungsnaht zwischen Membran (4, 23, 42, 62, 82, 102) und Druckmittlergehäuse radial außerhalb der Dichtung (7) angeordnet ist.

2. Membrandruckmittler (1, 20, 40, 60, 80, 100) nach Anspruch 1,
**dadurch gekennzeichnet,**
**dass** die Membran (4, 23, 42, 62, 82, 102) für einen Membrandruckmittler neben einer Messfläche (8, 43, 84) mit einer typisch wellen- oder trapezförmigen Struktur der Membran (4, 23, 42, 62, 82, 102) im Randbereich (5, 24, 63, 106) eine vorgeprägte Struktur (9), und zwar in Form einer nutförmigen Vertiefung zur Aufnahme eines eckigen oder runden Dichtungsrings oder einen flachen Abschnitt zur Anlage eines flachen Dichtungsringes aufweist.

3. Membrandruckmittler (1, 20, 40, 60, 80, 100) nach Anspruch 1 oder 2,
**dadurch gekennzeichnet,**
**dass** die Membran (4, 23, 42, 62, 82, 102) mit dem Druckmittlergehäuse im Anlage- oder Auflagebereich vollflächig verlötet ist.

4. Membrandruckmittler (1, 20, 40, 60, 80, 100) nach Anspruch 1,
**dadurch gekennzeichnet,**
**dass** die Membran (4, 23, 42, 62, 82, 102) bei einem Rohrdruckmittler über die innere Radialfläche hinaus bis zur Stirnfläche zumindest teilweise umgebördelt ist.

5. Membrandruckmittler (1, 20, 40, 60, 80, 100) nach einem der Ansprüche 1 oder 4,
**dadurch gekennzeichnet,**
**dass** das Druckmittlergehäuse eines Rohrdruckmittlers eine Vertiefung, beispielsweise eine Nut, zur Aufnahme einer Dichtung in zumindest einer Stirnfläche aufweist und die Membran eine korrespondierende Verformung aufweist, welche in der Struktur der Stirnfläche des Druckmittlergehäuses zumindest teilweise einliegt, und/oder dass das Druckmittlergehäuse eines Rohrdruckmittlers eine ebene ausgebildete Anlagefläche in der Stirnfläche aufweist, an welcher eine Dichtung anliegt.

6. Membrandruckmittler (1, 20, 40, 60, 80, 100) nach Anspruch 5,
**dadurch gekennzeichnet,**
**dass** die Membran mit dem Druckmittlergehäuse bei einem Rohrdruckmittler jeweils endseitig außerhalb des Membranbettes mit der Axialfläche des rohrförmigen Druckmittlergehäuses und/oder der Stirnfläche vollflächig verlötet ist.

7. Membrandruckmittler (1, 20, 40, 60, 80, 100) nach einem der Ansprüche 1 bis 6,
**dadurch gekennzeichnet,**
**dass** die Membran eines Rohrdruckmittlers eine unrunde Querschnittsform im Bereich des Membranbettes (3, 27, 47, 65, 105) aufweist oder dass die Membran eines Rohrdruckmittlers in Axialrichtung verlaufende Sicken, Einbuchtungen oder tangentiale Abschrägungen im Bereich des Membranbettes (3, 27, 47, 65, 105) aufweist.

8. Membrandruckmittler (1, 20, 40, 60, 80, 100) nach einem der Ansprüche 1 bis 7,
**dadurch gekennzeichnet,**
**dass** das Druckmittlergehäuse und/oder die Membran (4, 23, 42, 62, 82, 102) aus einem Sonderwerkstoff, vorzugsweise Tantal, Titan, Nickel, Monel, Duplex, Inconel oder Hastelloy C 276 besteht oder mit einem Sonderwerkstoff der vorgenannten Art beschichtet ist.

9. Membrandruckmittler (1, 20, 40, 60, 80, 100) nach einem der Ansprüche 1 bis 8,
**dadurch gekennzeichnet,**
**dass** das Druckmittlergehäuse aus lötbaren Materialien, beispielsweise Bundmetall, wie MS58, MS63, aus Aluminium oder aus Edelstahl, wie V2A oder V4A, besteht und die Membran (4, 23, 42, 62, 82, 102) ebenfalls aus Edelstahl, beispielsweise V2A oder V4A besteht.

10. Membrandruckmittler (1, 20, 40, 60, 80, 100) nach einem der Ansprüche 1 bis 9,
**dadurch gekennzeichnet,**
**dass** das Druckmittlergehäuse und die Membran (4, 23, 42, 62, 82, 102) im Randbereich (5, 24, 63, 106) eines Membrandruckmittlers (1, 20, 40, 60, 80, 100) oder der Stirnfläche eines Rohrdruckmittlers vollflächig verlötet ist.

11. Verfahren zur Herstellung eines Membranruckmittlers (1, 20, 40, 60, 80, 100) nach einem der Ansprüche 1 bis 10,
**gekennzeichnet durch** ein auf die jeweilige Größe der Auflagefläche zwischen Druckmittlergehäuse und Membran (4, 23, 42, 62, 82, 102) zugeschnittenes Verbindungsmittel in einer Dicke von 40 bis 50 µ, Auflegen der vorgeformten Membran (4, 23, 42, 62, 82, 102) mit ihrem ebenen Randbereich auf das Verbindungsmittel, Erzeugen einer Andruckkraft gegen die Membran (4, 23, 42, 62, 82, 102) und das Verbindungsmittel und Verlöten der Membran (4, 23, 42, 62, 82, 102) mit dem Druckmittlergehäuse unter Hochvakuum für die Dauer einer Stunde oberhalb des Schmelzpunktes des Verbindungsmittels und anschließender längerer Abkühlphase von zumindest einer Stunde.

12. Verfahren zur Herstellung eines Membrandruckmittlers (1, 20, 40, 60, 80, 100) nach Anspruch 11,
**dadurch gekennzeichnet,**
**dass** das Verbindungsmittel aus einem Lot, vorzugsweise einer dünnen Lotfolie besteht.

13. Verfahren zur Herstellung eines Membrandruckmittlers (1, 20, 40, 60, 80, 100) nach Anspruch 11 oder 12,
**dadurch gekennzeichnet,**
**dass** eine metallische Verbindung zwischen Membran (4, 23, 42, 62, 82, 102) und Auflagefläche des Druckmittlergehäuses hergestellt wird.

14. Verfahren zur Herstellung eines Membrandruckmittlers (1, 20, 40, 60, 80, 100) nach einem der Ansprüche 11, 12 oder 13,
**dadurch gekennzeichnet,**
**dass** eine vollflächige homogene Verbindung des gesamten Randbereiches der Membran (4, 23, 42, 62, 82, 102) mit der Auflagefläche des Druckmittlergehäuses durch Löten hergestellt wird.

## Claims

1. Diaphragm seal (1, 20, 40, 60, 80, 100), in particular to be employed with aggressive or highly viscous media, preferably in the form of a plate or inline diaphragm seal, comprising at least one diaphragm seal housing with a diaphragm bed (3, 27, 47, 65, 105) sunk in a recess, and a diaphragm (4, 23, 42, 62, 82, 102) fixed in a fluid-tight manner opposite the diaphragm bed (3, 27, 47, 65, 105), **characterized in that**
the diaphragm (4, 23, 42, 62, 82, 102) comprises an edge region (5, 24, 63, 106) which is extended starting from the diaphragm bed (3, 27, 47, 65, 105) beyond the sealing region (6, 25), so that in the edge region (5, 24, 63, 106) of the diaphragm (4, 23, 42, 62, 82, 102) and the diaphragm seal housing, a groove-like indentation is provided for receiving a seal (7), so that the seal (7) lies directly in the indentation and against the diaphragm (4, 23, 42, 62, 82, 102), wherein a connecting seam between the diaphragm (4, 23, 42, 62, 82, 102) and the diaphragm seal housing is arranged radially outside the seal (7).

2. Diaphragm seal (1, 20, 40, 60, 80, 100) according to claim 1, **characterized in that** the diaphragm (4, 23, 42, 62, 82, 102) for a diaphragm seal (8, 43, 84) comprises, apart from a measuring surface (8, 43, 84) with a typically undulated or trapezoidal structure of the diaphragm (4, 23, 42, 62, 82, 102) in the edge region (5, 24, 63, 106), a pre-embossed structure (9) in the form of a groove-like indentation for receiving a cornered or round sealing ring or a flat section to place a flat sealing ring against it.

3. Diaphragm seal (1, 20, 40, 60, 80, 100) according to claim 1 or 2, **characterized in that** the diaphragm (4, 23, 42, 62, 82, 102) is soldered to the diaphragm seal housing all-over in the contact or support region.

4. Diaphragm seal (1, 20, 40, 60, 80, 100) according to claim 1, **characterized in that** the diaphragm (4, 23, 42, 62, 82, 102) is, in case of an inline diaphragm seal, at least partially beaded beyond the inner radial face up to the front face.

5. Diaphragm seal (1, 20, 40, 60, 80, 100) according to one of claims 1 or 4, **characterized in that** the diaphragm seal housing of an inline diaphragm seal comprises an indentation, for example a groove, to receive a seal in at least one front face, and the diaphragm comprises a corresponding deformation which at least partially lies within the structure of the front face of the diaphragm seal housing, and/or that the diaphragm seal housing of an inline diaphragm seal comprises a planar contact surface in the front face against which a seal is lying.

6. Diaphragm seal (1, 20, 40, 60, 80, 100) according to claim 5, **characterized in that** the diaphragm with the diaphragm seal housing in an inline diaphragm seal is, at each end side, soldered all-over outside the diaphragm bed to the axial face of the tubular diaphragm seal housing and/or the front face.

7. Diaphragm seal (1, 20, 40, 60, 80, 100) according to one of claims 1 to 6, **characterized in that** the diaphragm of an inline diaphragm seal comprises a noncircular cross-sectional area in the region of the diaphragm bed (3, 27, 47, 65, 105), or that the diaphragm of an inline diaphragm seal comprises beads, notches or tangential chamfers in the region of the diaphragm bed (3, 27, 47, 65, 105), which extend in the axial direction.

8. Diaphragm seal (1, 20, 40, 60, 80, 100) according to one of claims 1 to 7, **characterized in that** the diaphragm seal housing and/or the diaphragm (4, 23, 42, 62, 82, 102) consists of a special material, preferably tantalum, titanium, nickel, monel, duplex, inconel or hastelloy C 276, or is coated with a special material of the above mentioned type.

9. Diaphragm seal (1, 20, 40, 60, 80, 100) according to one of claims 1 to 8, **characterized in that** the diaphragm seal housing consists of solderable materials, for example non-ferrous metal, such as MS58, MS63, or of aluminium or of high-grade steel, such as V2A or V4A, and the diaphragm (4, 23, 42, 62, 82, 102) also consists of high-grade steel, for example V2A or V4A.

10. Diaphragm seal (1, 20, 40, 60, 80, 100) according to one of claims 1 to 9, **characterized in that** the diaphragm seal housing and the diaphragm (4, 23, 42, 62, 82, 102) are soldered all-over in the edge region (5, 24, 63, 106) of a diaphragm seal (1, 20, 40, 60, 80, 100) or the front face of an inline diaphragm seal.

11. Method for manufacturing a diaphragm seal (1, 20, 40, 60, 80, 100) according to one of claims 1 to 10, **characterized by** a connecting means cut to the respective size of the support surface between the diaphragm seal housing and the diaphragm (4, 23, 42, 62, 82, 102) and having a thickness of 40 to 50 µ, placing the preformed diaphragm (4, 23, 42, 62, 82, 102) with its plane edge region onto the connecting means, generating a contact force against the diaphragm (4, 23, 42, 62, 82, 102) and the connecting means, and soldering the diaphragm (4, 23, 42, 62, 82, 102) to the diaphragm seal housing under high-vacuum for the duration of one hour above the melting point of the connecting means and with a subsequent longer cooling phase of at least one hour.

12. Method for manufacturing a diaphragm seal (1, 20, 40, 60, 80, 100) according to claim 11, **characterized in that** the connecting means consists of a solder or brazing metal, preferably a thin solder foil.

13. Method for manufacturing a diaphragm seal (1, 20, 40, 60, 80, 100) according to claim 11 or 12, **characterized in that** a metallic connection between the diaphragm (4, 23, 42, 62, 82, 102) and the support surface of the diaphragm seal housing is produced.

14. Method for manufacturing a diaphragm seal (1, 20, 40, 60, 80, 100) according to one of claims 11, 12 or 13, **characterized in that** an all-over homogenous connection of the complete edge region of the diaphragm (4, 23, 42, 62, 82, 102) is produced with the support surface of the diaphragm seal housing by soldering.

## Revendications

1. Séparateur à membrane (1, 20, 40, 60, 80, 100), utilisé en particulier avec des milieux agressifs ou hautement visqueux, de préférence sous forme de séparateur à plaque ou tubulaire, comprenant au moins un boîtier de séparateur avec un lit de membrane (3, 27, 47, 65, 105) inséré dans un évidement et avec une membrane (4, 23, 42, 62, 82, 102), laquelle est fixée de manière étanche aux fluides à l'opposé du lit de membrane (3, 27, 47, 65, 105),
**caractérisé en ce que**
la membrane (4, 23, 42, 62, 82, 102) présente une zone périphérique (5, 24, 63, 106), laquelle depuis le lit de membrane (3, 27, 47, 65, 105) s'étend jusqu'au-delà de la zone d'étanchéité (6, 25), de telle façon que, dans la zone périphérique (5, 24, 63, 106) de la membrane (4, 23, 42, 62, 82, 102) et du boîtier de séparateur, est prévu un creux en gorge pour loger un joint d'étanchéité (7), de sorte que le joint d'étanchéité (7) est situé directement dans le creux et est en contact avec la membrane (4, 23, 42, 62, 82, 102), un cordon de raccord étant disposé entre la membrane (4, 23, 42, 62, 82, 102) et le boîtier de séparateur radialement à l'extérieur du joint d'étanchéité (7).

2. Séparateur à membrane (1, 20, 40, 60, 80, 100) selon la revendication 1,
**caractérisé en ce que**,
la membrane (4, 23, 42, 62, 82, 102) pour un séparateur à membrane présente, outre une surface de mesure (8, 43, 84) avec une structure de la membrane typique ondulée ou trapézoïdale (4, 23, 42, 62, 82, 102), dans la zone périphérique (5, 24, 63, 106), une structure pré-formuée (9) et ce, en forme d'un creux en gorge pour le logement d'un joint d'étanchéité carré ou torique ou d'une section plate pour le contact avec un joint d'étanchéité plat.

3. Séparateur à membrane (1, 20, 40, 60, 80, 100) selon la revendication 1 ou 2,
**caractérisé en ce que**
la membrane (4, 23, 42, 62, 82, 102) avec le boîtier de séparateur est brasée dans la zone de contact ou d'appui sur toute sa surface.

4. Séparateur à membrane (1, 20, 40, 60, 80, 100) selon la revendication 1,
**caractérisé en ce que**
la membrane (4, 23, 42, 62, 82, 102) est, dans un séparateur tubulaire, au moins partiellement bridée au-delà de la surface radiale intérieure jusqu'à la surface avant.

5. Séparateur à membrane (1, 20, 40, 60, 80, 100) selon l'une des revendications 1 ou 4,
**caractérisé en ce que**
le boîtier de séparateur d'un séparateur tubulaire présente un creux, par exemple une gorge pour le logement d'un joint d'étanchéité dans au moins une surface avant et la membrane présente une déformation correspondante, laquelle est située au moins en partie à l'intérieur de la structure de la surface avant du boîtier de séparateur, et/ou **en ce que** le boîtier de séparateur d'un séparateur tubulaire présente une surface de contact à configuration plane dans la surface avec laquelle un joint d'étanchéité est en contact.

6. Séparateur à membrane (1, 20, 40, 60, 80, 100) selon la revendication 5,
**caractérisé en ce que**
la membrane avec le boîtier de séparateur est, dans un séparateur tubulaire, brasée respectivement côté extrémité à l'extérieur du lit de membrane avec la surface axiale du boîtier de séparateur tubulaire et/ou avec la surface avant sur toute sa surface.

7. Séparateur à membrane (1, 20, 40, 60, 80, 100) selon l'une des revendications 1 à 6,
**caractérisé en ce que**
la membrane d'un séparateur tubulaire présente une forme de coupe en faux-rond au niveau du lit de membrane (3, 27, 47, 65, 105) ou **en ce que** la membrane d'un séparateur tubulaire présente, des moulures, des rainures ou des biseautages tangentiels au niveau du lit de membrane (3, 27, 47, 65, 105) s'étendant dans la direction axiale.

8. Séparateur à membrane (1, 20, 40, 60, 80, 100) selon l'une des revendications 1 à 7,
**caractérisé en ce que**
le boîtier de séparateur et/ou la membrane (4, 23, 42, 62, 82, 102) est constituée d'une matière spéciale, de préférence du tantale, du titane, du nickel, du monel, du duplex, de l'inconel ou de l'Hastelloy C-276 ou est enrobée d'une matière spéciale du type susmentionné.

9. Séparateur à membrane (1, 20, 40, 60, 80, 100) selon l'une des revendications 1 à 8,
**caractérisé en ce que**
le boîtier de séparateur est constitué de matières pouvant être brasées, par exemple de métal non ferreux, comme le MS58, MS63, d'aluminium ou d'acier, comme le V2A ou le V4A, et la membrane (4, 23, 42, 62, 82, 102) est également constituée d'acier, par exemple de V2A ou de V4A.

10. Séparateur à membrane (1, 20, 40, 60, 80, 100) selon l'une des revendications 1 à 9,
**caractérisé en ce que**
le boîtier de séparateur et la membrane (4, 23, 42, 62, 82, 102) sont brasés, dans la zone périphérique (5, 24, 63, 106) d'un séparateur à membrane 1, 20, 40, 60, 80, 100) ou de la surface avant d'un séparateur tubulaire sur toute leur surface.

11. Procédé de fabrication d'un séparateur à membrane (1, 20, 40, 60, 80, 100) selon l'une des revendications 1 à 10,
**caractérisé par** un moyen de raccord découpé à la dimension respective de la surface d'appui entre le boîtier de séparateur et la membrane (4, 23, 42, 62, 82, 102), dans une épaisseur allant de 40 à 50 µ, la pose de la membrane pré-formée (4, 23, 42, 62, 82, 102) avec sa zone périphérique plane sur le moyen de raccord, la génération d'une force de pression contre la membrane (4, 23, 42, 62, 82, 102) et le moyen de raccord, et le brasage de la membrane (4, 23, 42, 62, 82, 102) avec le boîtier de séparateur sous vide poussé pendant une heure au-dessus du point de fusion du moyen de raccord puis phase de refroidissement consécutive plus longue d'au moins une heure.

12. Procédé de fabrication d'un séparateur à membrane (1, 20, 40, 60, 80, 100) selon la revendication 11,
**caractérisé en ce que**
le moyen de raccord est constitué d'une brasure, de préférence d'une feuille de brasage mince.

13. Procédé de fabrication d'un séparateur à membrane (1, 20, 40, 60, 80, 100) selon la revendication 11 ou 12,
**caractérisé en ce que**
on réalise une liaison métallique entre la membrane (4, 23, 42, 62, 82, 102) et la surface d'appui du boîtier de séparateur.

14. Procédé de fabrication d'un séparateur à membrane (1, 20, 40, 60, 80, 100) selon l'une des revendications 11, 12 ou 13,
**caractérisé en ce que**
on réalise une liaison homogène de toute la surface de la zone périphérique intégrale de la membrane (4, 23, 42, 62, 82, 102) avec la surface d'appui du boîtier de séparateur par brasage.
